# FASCICULE DE BREVET EUROPEEN

(11) **EP 0 650 868 B1**
(45) Date de publication et mention de la délivrance du brevet: **18.06.1997**
(21) Numéro de dépôt: 94402471.0
(22) Date de dépôt: 02.11.1994
(51) Int. Cl.: B60R 19/24

(54) **Dispositif pour l'assemblage d'un pare-chocs sur un véhicule**
Vorrichtung zur Befestigung eines Stossfängers an einem Kraftfahrzeug
Bumper mounting device for a vehicle

(30) Priorité: 03.11.1993 FR 9313075
(43) Date de publication de la demande: 03.05.1995
(73) Titulaire: ECIA - EQUIPEMENTS ET COMPOSANTS POUR L'INDUSTRIE AUTOMOBILE, F-25400 Audincourt (FR)
(72) Inventeur: Pinard, Eric, F-25150 Pont de Roide (FR); Baumann, Gilbert, F-35310 Herimoncourt (FR)
(74) Mandataire: Polus, Camille

(56) Documents cités:
- EP-A- 0 563 548
- DE-A- 2 129 526
- DE-A- 2 361 213
- GB-A- 2 022 212
- PATENT ABSTRACTS OF JAPAN vol. 9, no. 226 (M-412) 12 Septembre 1985 & JP-A-60 082 465 (NISSAN JIDOSHA K.K.) 10 Mai 1985
- RESEARCH DISCLOSURE, vol.190, no.03, Février 1980, HAVANT GB ANONYMOUS 'buckling lever shock absorber'

## Description

La présente invention concerne le domaine technique des véhicules automobiles terrestres et, plus particulièrement, un dispositif pour l'assemblage d'un pare-chocs d'un tel véhicule sur la structure de ce dernier.

Un véhicule automobile terrestre se compose, de manière classique, d'une coque ou structure qui est destinée à recevoir des éléments de carrosserie tels que par exemple une calandre, des ailes et des pare-chocs avant et arrière, ainsi qu'une façade avant qui est souvent pourvue d'équipements notamment de blocs optiques, d'un groupe moto-ventilateur pulseur d'air, d'un radiateur, d'un filtre à air, d'un avertisseur sonore et qui contribue aussi à la liaison et à la rigidification de la partie antérieure de la coque ou structure qui, habituellement, se prolonge par deux longerons latéraux qui forment brancard et qui notamment servent de berceau pour recevoir un groupe mototracteur et tout ce qui lui est associé.

Les pare-chocs de véhicules contemporains comprennent essentiellement, une poutre transversale et un revêtement extérieur ou peau entre lesquels est éventuellement placée une garniture. La poutre possède habituellement des propriétés mécaniques qui lui permettent de se déformer élastiquement voire d'une manière irréversible pour contribuer à l'absorption et à la dissipation de l'énergie qui résulte de chocs qualifiés de "grands" et qui peuvent survenir lorsque le véhicule circule à une vitesse supérieure à 4 km/h environ. Le revêtement ou peau a essentiellement pour but de conférer au véhicule son aspect esthétique et ses qualités aérodynamiques particulières et éventuellement, contribue à absorber l'énergie des chocs qualifiés de "petits" tels que ceux qui peuvent survenir lors d'une circulation à une vitesse ne dépassant pas 4 km/h environ, par exemple au cours de manoeuvres de rangement sur un parc de stationnement.

Un tel revêtement ou peau est actuellement de préférence, fabriqué à base de matériaux synthétiques tels que du polypropylène ou une résine époxy renforcée par un tissu de fibres de verre notamment. Comme il est connu, selon les matériaux utilisés, un tel revêtement ou peau est obtenu par des techniques de fabrication d'injection, d'estampage, voire d'extrusion/soufflage.

Comme il est connu, la poutre d'un tel pare-chocs est réunie à la coque ou structure à l'aide de moyens de fixation appropriés, et le revêtement ou peau est, lui, assujetti à l'aide de pontets d'assemblage ou similaires disposés en des endroits appropriés par exemple à proximité des flancs du pare-chocs et à la base de celui-ci.

Du fait des tolérances de fabrication de chacun des constituants à réunir, ainsi que des tolérances de montage et de fixation, il s'ensuit que lors de son assemblage, le revêtement ou peau du pare-chocs présente des écarts de position aussi bien longitudinalement que transversalement voire verticalement par rapport à sa position théorique ou nominale. Il s'ensuit que si l'on montait tel quel, dans une telle situation, un revêtement ou peau de pare-chocs, certaines de ses lignes de contour se raccorderaient parfois mal avec les lignes correspondantes d'autres constituants tels que les ailes ou les blocs optiques et la calandre, notamment.

Une telle situation n'est pas acceptable, car elle donnerait aux véhicules terminés, sortant des lignes de fabrication, un aspect manquant d'harmonie et laissant planer un doute sur la qualité et le soin apportés à sa construction.

Pour remédier à ce type de défaut, les constituants à réunir sont tels que certains d'entre eux au moins sont doués de degrés de liberté, entre certaines limites, qui permettent lors de la phase finale du montage de rattraper les écarts de position résultant des tolérances de fabrication et de montage.

On comprend que l'obtention de tels degrés de liberté nécessite des agencements spéciaux qui grèvent les coûts de fabrication, puis ensuite à la phase ultime du montage imposent des réglages qui obèrent à nouveau les coûts de production.

Le but de l'invention est de remédier à ce type d'inconvénients.

L'invention concerne un dispositif pour l'assemblage d'un pare-chocs de véhicule automobile terrestre sur la structure de ce dernier et qui a la configuration générale d'un étrier support déformable polygonal qui comprend des faces et au moins quatre sommets. Un tel dispositif est divulgué dans le document GB-A-2 022 212. Selon l'invention, le dispositif comprend en outre des articulations obtenues par un amincissement local de matière de chaque sommet relativement aux faces qui l'encadrent.

D'autres caractéristiques de l'invention ressortiront de la lecture de la description et des revendications qui suivent, ainsi que l'examen du dessin annexé, donné seulement à titre d'exemple, où :
- la Figure 1 est une vue perspective schématique éclatée d'un mode de réalisation d'un revêtement ou peau de pare-chocs équipé de dispositifs d'assemblage selon l'invention et associé à une partie antérieure de véhicule; et

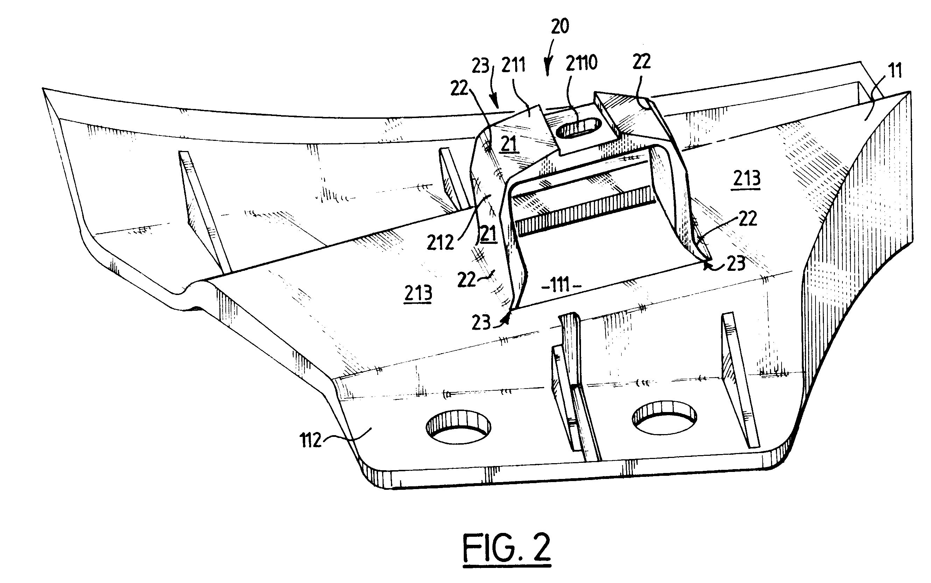

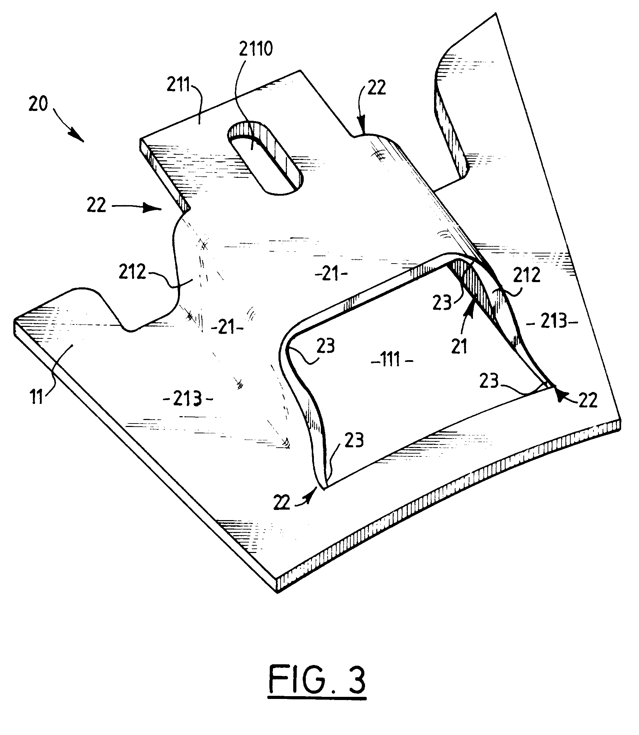

- les Figures 2 et 3 sont des vues de deux variantes d'exécution d'un dispositif d'assemblage selon l'invention utilisables pour le mode de réalisation de la Figure 1.

Les véhicules automobiles terrestres étant bien connus dans la technique ainsi que leur structure ou coque et pare-chocs, on ne décrira dans ce qui suit que ce qui concerne directement ou indirectement l'invention. Pour le surplus, l'Homme du Métier du secteur technique considéré utilisera les techniques classiques courantes à sa disposition pour faire face aux problèmes particuliers auxquels il est confronté.

Dans ce qui suit, on utilise toujours un même numéro de référence pour identifier un élément homologue, quel que soit son mode de réalisation ou sa variante d'exécution.

Pour la commodité de l'exposé, on décrira successivement chacun des constituants d'un dispositif d'assemblage d'un pare-chocs de véhicule automobile terrestre sur la coque ou structure de ce dernier, avant d'en exposer la fabrication au besoin, et le montage et le fonctionnement.

Dans ce qui suit, les indications telles que haut, bas, latéral, transversal, vertical, avant, arrière, antérieur, postérieur notamment sont repérées par rapport aux axes d'orientation traditionnels d'un véhicule.

Le dispositif d'assemblage selon l'invention est destiné à réunir un pare-chocs sur une coque ou structure S traditionnelle d'un véhicule. Une telle coque ou structure S se prolonge habituellement par des longerons L qui forment un brancard pour un berceau destinés à recevoir un groupe mototracteur avec un train avant, sa suspension et sa direction notamment.

Une telle coque ou structure reçoit des éléments de carrosserie tels qu'une calandre D, des ailes A et un pare-chocs 10 qui sont réunis habituellement aux longerons L à l'aide de moyens de fixation éventuellement avec interposition de tampons absorbeurs d'énergie.

Une façade avant F le plus souvent équipée de blocs optiques O, d'un groupe motoventilateur P pulseur d'air, d'un radiateur, d'un filtre à air E et au besoin d'un avertisseur sonore K, est aussi montée à la partie antérieure de la coque ou structure S et contribue souvent à en assurer la rigidification en procurant la liaison des deux côtés opposés.

Un pare-chocs 10 se compose, le plus souvent, d'une poutre transversale intérieure non illustrée et d'un revêtement 11 ou peau, extérieur avec au besoin interposition entre poutre et revêtement d'une garniture contribuant à assurer l'absorption d'énergie en cas de chocs.

Le revêtement ou peau 11 est muni d'au moins un ajour 111 ménagé dans ce revêtement et situé à un endroit approprié pour les raisons que l'on comprendra par la suite. Ce revêtement ou peau 11 comprend aussi au moins un pontet 112 pour son assemblage et, éventuellement, au moins une patte 113 latérale dont le rôle apparaîtra par la suite.

Un dispositif d'assemblage 20 d'un pare-chocs de véhicule automobile terrestre sur la structure ou coque de ce dernier, selon l'invention, a une configuration générale en étrier-support déformable polygonal. Cet étrier comprend des faces 21 et au moins quatre sommets 22 qui sont réunis par des articulations 23.

Comme on le voit, cet étrier-support se présente essentiellement à la manière d'un pont 211 avec deux branches 212 qui sont situées en vis-à-vis, et deux rebords 213 de préférence pratiquement parallèles au pont 211 et dirigés dans des sens opposé, comme illustré. L'une des extrémités de chacune des branches 211 est réunie au pont 211 par une articulation 23 et les deux rebords 213 sont chacun réunis à l'autre des extrémités de l'une des branches 212 par une autre articulation 23. L'étrier-support selon l'invention a donc, en section droite, l'aspect d'un U plus ou moins divergent au besoin.

Les articulations 23 sont obtenues par un amincissement local de matière du sommet 22 relativement aux faces 21 qui l'encadrent, comme cela apparaît clairement sur les figures du dessin.

De préférence, l'étrier est transpercé d'un orifice 2110 par exemple oblong, comme illustré, placé sur le pont 211.

Comme on peut l'observer, un dispositif selon l'invention est porté par ce revêtement ou peau du pare-choc de telle manière que l'étrier-support fasse saillie sur un côté du revêtement ou peau du pare-chocs et cela de préférence à l'aplomb d'un ajour.

Comme on le comprend du fait de la structure donnée du dispositif selon l'invention, l'étrier-support peut se déformer lorsqu'il est soumis à une sollicitation qui présente une composante située dans un plan perpendiculaire aux articulations et parallèle au pont.

En outre, du fait de la configuration adoptée selon laquelle la taille du pont est inférieure à celle de l'ajour, l'étrier-support est réversible, c'est-à-dire qu'il peut traverser l'ajour de manière à faire saillie sur l'autre côté du revêtement, opposé à celui sur lequel il était situé initialement par exemple à l'issue des opérations de fabrication.

De préférence, l'étrier-support est fait en un matériau synthétique qui est par exemple fixé au revêtement par l'intermédiaire de ses rebords, notamment par soudage aux ultra-sons lorsque le revêtement est fait lui-même en un matériau synthétique, voire d'un seul tenant avec ce dernier. L'étrier support et le revêtement peuvent être faits en un même matériau ou dans des matériaux différents. L'étrier-support peut aussi être fixé au revêtement par toute autre technique appropriée par exemple, vissage, rivetage, collage, etc.

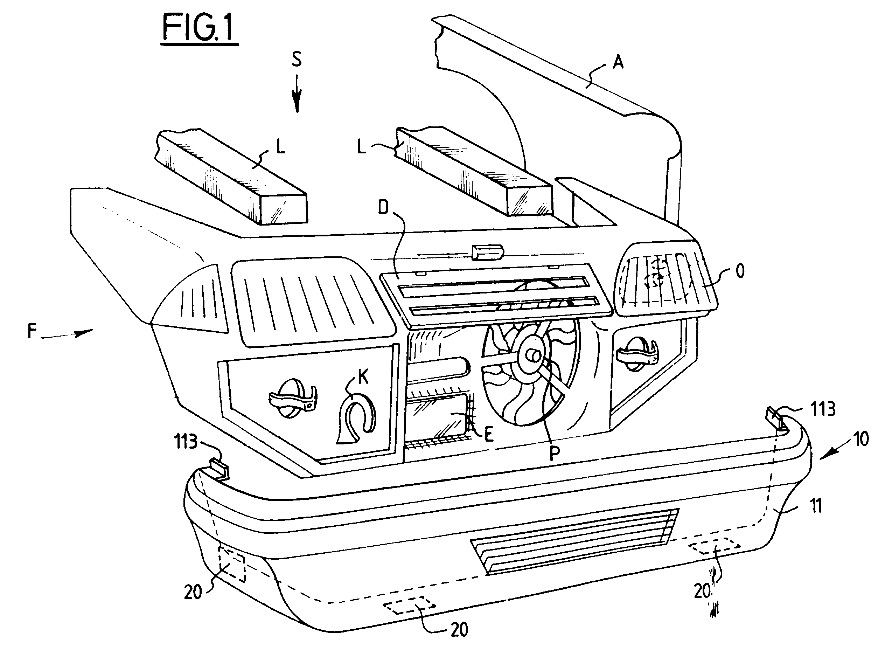

On utilise un dispositif selon l'invention au moins à la base du revêtement et au moins sur un flanc de ce dernier comme illustré en particulier sur la Figure 1.

Pour mettre en place un revêtement de pare-chocs équipé d'un dispositif d'assemblage en étrier-support selon l'invention, on procède comme indiqué par la suite.

On se sert du ou des dispositifs d'assemblage situé(s) à la base du revêtement qui permet(tent) de faire un alignement dans un sens ou dans l'autre selon la direction transversale Y. Un tel alignement peut se faire indépendamment de la fixation de ce revêtement par rapport à ses autres points de montage. On observera en outre que la réversibilité par inversion du dispositif d'assemblage en étier permet aussi des variations pour compenser des écarts selon la direction verticale Z.

De plus, on notera que ce dispositif d'assemblage en étrier-support peut aussi servir à la fixation d'autres constituants tels que par exemple des écrans protecteurs ou similaires sous moteur.

Ensuite, on peut procéder à un alignement avec les lignes de contour des ailes par un déplacement selon la direction longitudinale X en utilisant le trou oblong qui est mis en concordance avec un trou correspondant approprié de l'aile; réglages terminés l'immobilisation finale est obtenue par une vis et un écrou engagés dans les trous ou par toute technique classique similaire appropriée.

On observera que ce processus a l'avantage de ne pas dérégler l'ajustement du revêtement avec le bord de l'aile monté directement ou non sur le brancard de la coque ou structure.

Outre les avantages que le dispositif selon l'invention apporte au montage, il offre un intérêt notable en cas de chocs à proximité de la zone médiane du pare-chocs puisque le montage au niveau de l'aile présente la particularité d'être mobile selon l'axe longitudinal X et de ne pas déformer l'aile ni de provoquer de rupture de la fixation.

Comme on le voit en examinant les figures, lorsqu'un revêtement ou peau est muni de pattes latérales, celles-ci du fait de leur déport transversal par exemple vers l'intérieur permettent de coiffer localement le bord de l'aile correspondante et donc de parfaire l'alignement.

Ce qui a été indiqué à propos d'un pare-chocs avant vaut aussi bien sûr pour un pare-chocs arrière après transposition correspondante.

L'exposé qui précède met bien en lumière les particularités de l'invention, l'intérêt qu'elle offre et les avantages qu'elle procure.

## Revendications

1. Dispositif d'assemblage (20) d'un pare-chocs (10) de véhicule automobile terrestre sur la structure (S) de ce dernier, qui a la configuration générale d'un étrier support (20) déformable polygonal qui comprend des faces (21) et au moins quatre sommets (22), qui est caractérisé en ce que le dispositif comprend des articulations (23) obtenues par un amincissement local de matière de chaque sommet (22) relativement aux faces (21) qui l'encadrent.

2. Dispositif selon la revendication 1, caractérisé en ce que l'étrier support (20) comprend un pont (211), deux branches (212) en vis-à-vis dont l'une des extrémités de chacune d'elles est réunie à ce pont (211) par une articulation (23) et deux rebords (213) chacun réuni à l'autre des extrémités de l'une des branches (212) par une articulation (23).

3. Dispositif selon la revendication 2, caractérisé en ce que les rebords (213) sont pratiquement parallèles au pont (211).

4. Dispositif selon la revendication 2 ou 3, caractérisé en ce que les rebords (213) sont dirigés dans des sens opposés.

5. Dispositif selon l'une quelconque des revendications 1 à 4, caractérisé en ce que l'étrier support (20) est transpercé d'un orifice (2110).

6. Dispositif selon la revendication 5, caractérisé en ce que l'orifice (2110) est oblong.

7. Dispositif selon l'une quelconque des revendications 5 et 6, caractérisé en ce que l'orifice (2110) est situé sur le pont (211).

8. Dispositif selon l'une quelconque des revendications 1 à 7 pour un pare-chocs (10) qui comprend notamment un revêtement, caractérisé en ce que l'étrier support (20) est porté par ce revêtement (11).

9. Dispositif selon la revendication 8, caractérisé en ce que l'étrier support (20) fait saillie sur un côté du revêtement (11) du pare-chocs et est situé à l'aplomb d'un ajour (111) ménagé dans ce revêtement (11).

10. Dispositif selon la revendication 9, caractérisé en ce que l'étrier support (20) est réversible par traversée de cet ajour (111) de manière à pouvoir faire saillie sur l'autre côté du revêtement (11).

11. Dispositif selon l'une quelconque des revendications 1 à 10, caractérisé en ce que l'étrier support (20) est fait en un matériau synthétique.

12. Dispositif selon la revendication 11 pour un pare-chocs dont le revêtement (11) est fait en un matériau synthétique, caractérisé en ce que l'étrier support (20) est fixé au revêtement (11).

## Claims

1. Apparatus (20) for mounting a bumper (10) for a terrestrial motor vehicle on the structure (S) of the latter, which has the general configuration of a deformable polygonal support bracket (20) and which comprises surfaces (21) and at least four vertices (22), which is characterised in that the apparatus comprises articulations (23) obtained by local thinning of the material of each vertex (22) relative to the surfaces (21) which enclose it.

2. Apparatus according to claim 1, characterised in that the support bracket (20) comprises a bridge (211), two opposing branches (212), one end of each branch being connected to the bridge (211) by an articulation (23), and two edge portions (213), each connected to the other end of one of the branches (212) by an articulation (23).

3. Apparatus according to claim 2, characterised in that the edge portions (213) are substantially parallel to the bridge (211).

4. Apparatus according to claim 2 or 3, characterised in that the edge portions (213) extend in opposite directions.

5. Apparatus according to any one of claims 1 to 4, characterised in that the support bracket (20) is pierced through by an opening (2110).

6. Apparatus according to claim 5, characterised in that the opening (2110) is oblong.

7. Apparatus according to one of claims 5 and 6, characterised in that the opening (2110) is located on the bridge (211).

8. Apparatus according to any one of claims 1 to 7 for a bumper (10) which comprises a covering, in particular, characterised in that the support bracket (20) is carried by this covering (11).

9. Apparatus according to claim 8, characterised in that the support bracket (20) projects over one side of the covering (11) of the bumper and is aligned with an opening (111) provided in this covering (11).

10. Apparatus according to claim 9, characterised in that the support bracket (20) is reversible by being passed through this opening (11) so as to project over the other side of the covering (11).

11. Apparatus according to any one of claims 1 to 10, characterised in that the support bracket (20) is made of a synthetic material.

12. Apparatus according to claim 11, for a bumper the covering (11) of which is made of a synthetic material, characterised in that the support bracket (20) is fixed to the covering (11).

## Patentansprüche

1. Vorrichtung zur Befestigung (20) eines Stoßfängers (10) eines Landkraftfahrzeugs an der Struktur (S) dieses letzteren, welche die allgemeine Form eines polygonal verformbaren Haltebügels (20) aufweist, der Flächen (21) und mindestens vier Scheitel (22) umfaßt, dadurch gekennzeichnet, daß die Vorrichtung Gelenke (23) aufweist, die durch eine örtliche Materialverdünnung jedes Scheitels (22) im Verhältnis zu den ihn flankierenden Flächen (21) erhalten werden.

2. Vorrichtung nach Anspruch 1, dadurch gekennzeichnet, daß der Haltebügel (20) eine Brücke (211), zwei gegenüberliegende Schenkel (212), von denen jeweils ein Ende durch ein Gelenk (23) mit dieser Brücke (211) verbunden ist, und zwei Flansche (213) umfaßt, die jeweils durch ein Gelenk (23) mit dem anderen Ende eines der Schenkel (212) verbunden sind.

3. Vorrichtung nach Anspruch 2, dadurch gekennzeichnet, daß die Flansche (213) praktisch parallel zur Brücke (211) sind.

4. Vorrichtung nach Anspruch 2 oder 3, dadurch gekennzeichnet, daß die Flansche (213) in entgegengesetzte Richtungen gerichtet sind.

5. Vorrichtung nach einem der Ansprüche 1 bis 4, dadurch gekennzeichnet, daß der Haltebügel (20) von einer Öffnung (2110) durchlocht ist.

6. Vorrichtung nach Anspruch 5, dadurch gekennzeichnet, daß die Öffnung (2110) länglich ist.

7. Vorrichtung nach einem der Ansprüche 5 und 6, dadurch gekennzeichnet, daß sich die Öffnung (2110) auf der Brücke (211) befindet.

8. Vorrichtung nach einem der Ansprüche 1 bis 7 für einen Stoßfänger (10), der insbesondere eine Verkleidung umfaßt, dadurch gekennzeichnet, daß der Haltebügel (20) von dieser Verkleidung (11) getragen wird.

9. Vorrichtung nach Anspruch 8, dadurch gekennzeichnet, daß der Haltebügel (20) auf einer Seite der Verkleidung (11) des Stoßfängers vorspringt und in der Lotrechten eines in dieser Verkleidung (11) vorgesehenen Durchbruchs (111) angeordnet ist.

10. Vorrichtung nach Anspruch 9, dadurch gekennzeichnet, daß der Haltebügel (20) durch ein Hindurchführen durch diesen Durchbruch (111) umkehrbar ist, so daß er auf der anderen Seite der Verkleidung (11) vorspringen kann.

11. Vorrichtung nach einem der Ansprüche 1 bis 10, dadurch gekennzeichnet, daß der Haltebügel (20) aus Kunststoff gefertigt ist.

12. Vorrichtung nach Anspruch 11 für einen Stoßfänger, dessen Verkleidung (11) aus Kunststoff gefertigt ist, dadurch gekennzeichnet, daß der Haltebügel (20) an der Verkleidung (11) befestigt ist.
